# EUROPEAN PATENT SPECIFICATION

(11) **EP 2 965 636 B1**
(45) Date of publication and mention of the grant of the patent: **27.12.2017**
(21) Application number: 14759884.1
(22) Date of filing: 28.02.2014
(51) Int. Cl.: A23L 2/38, A23L 2/60

(54) **BEVERAGE**
GETRÄNK
BOISSON

(30) Priority: 08.03.2013 JP 2013047402
(43) Date of publication of application: 13.01.2016
(73) Proprietor: Suntory Beverage & Food Limited, Chuo-ku, Tokyo 104-0031 (JP)
(72) Inventor: YOSHIMOTO, Norihiko, Kawasaki-shi Kanagawa 211-0067 (JP)
(74) Representative: Vossius & Partner Patentanwälte Rechtsanwälte mbB
(86) International application number: PCT/JP2014/055010
(87) International publication number: WO 2014/136664

(56) References cited:
- WO-A1-03/007734
- WO-A1-2012/029132
- JP-A- H01 146 717
- JP-A- H06 253 801
- JP-A- 2004 089 102
- JP-A- 2007 068 466
- JP-A- 2009 517 025
- JP-A- 2013 009 661
- JP-B1- 5 291 257

## Description

### TECHNICAL FIELD

The present invention relates to beverages suitable for the way of drinking in small quantities over a prolonged period in order to alleviate the dryness of the mouth.

### BACKGROUND ART

A new way of drinking beverages is becoming popular in today's working offices. This is the habit of drinking mineral water, tea beverages and the like in small quantities over a prolonged period.

One reason for this phenomenon is that the mouth tends to become dry in stressful working offices. Specifically, in heated offices, low humidity increases the chance of the mouth becoming dry and in stressful environments such as meetings, saliva is not secreted and this again increases the chance of the mouth becoming dry. The dry mouth as contemplated here means the dryness of the mouth itself and is completely different from thirst which results from shortage of the water content in the whole body.

Beverages are, therefore, in great need that are suitable for the above-described way of drinking. However, beverages suited for this new way of drinking, namely, beverages that can be drunk in small quantities over a prolonged period while maintaining their good taste are yet to be developed.

On the other hand, there exist beverages that are intended not to deal with a dry mouth but to make up for the loss of water from the human body. Examples are isotonic drinks, typified by sports drinks, which have osmotic pressures almost equal to the osmotic pressure of the bodily fluid (approx. 280-290 mOsm/KG), as well as hypotonic drinks with osmotic pressures slightly lower than that of the bodily fluid (approx. 200 mOsm/KG). These may be exemplified by the electrolyte composition disclosed in Patent Document 1. Such beverages are not designed to be drunk in small quantities over a prolonged period.

### CITATION LIST

### PATENT DOCUMENTS

Patent Document 1: JP 2004-123642 A

JP 2004-089102 (A) describes a food product ameliorated in rough feel, obtained by containing a carbohydrate with a specific saccharide composition, namely, such one that the saccharide composition per solids of hydrolyzed starch comprises ≤ 17 wt.% of a monosaccharide, 6-20 wt.% of a disaccharide, 7-23 wt.% of a trisaccharide, 1-13 wt.% of a tetrasaccharide and 43-82 wt.% of pentasaccharide and higher saccharides.

### SUMMARY OF INVENTION

### TECHNICAL PROBLEM

An object of the present invention is to provide unconventional beverages that are suited for the recent way of drinking beverages, namely, the way of drinking in small quantities over a prolonged period in order to alleviate the dryness of the mouth.

### SOLUTION TO PROBLEM

The present inventors conducted intensive studies with a view to solving the above-mentioned problem and found as a result that by adjusting the osmotic pressure of a given beverage to lie within a range comparable to that of saliva which has not so far been adopted, the beverage could be modified to have characteristics suitable for the above-described new way of drinking. The present inventors also found that the makeup of saccharides is also important for providing such beverages suited for the new way of drinking. Specifically, the present inventors found that it is important to use trisaccharides which seldom has been employed in beverages, with the ratio between the total weights of disaccharides and trisaccharides in beverages being adjusted to lie within a specified range. It was also found that the proportion of the total amounts of monosaccharides, disaccharides and trisaccharides in the total amount of saccharides is another important factor.

The present invention concerns the following, to which it is by no means limited.
1. A beverage that comprises saccharides and which satisfies all of the following conditions (i) to (iii):
   (i) the total weights of mono-, di- and trisaccharides contained in the beverage account for 75% or more of the total weight of all saccharides in the beverage;
   (ii) the ratio of the total weight of the disaccharides to that of the trisaccharides is from 5:1 to 9:10; and
   (iii) the osmotic pressure is from 30 to 130 mOsm/KG.
2. The beverage as recited in 1, wherein the total content of all saccharides per 100 g of the beverage is from 0.5 to 10 g.
3. The beverage as recited in 1 or 2, wherein the total content of the trisaccharides per 100 g of the beverage is from 0.05 to 2.70 g.
4. The beverage as recited in any one of 1 to 3, wherein the total weight of the monosaccharides accounts for 2.0 to 70% of the total weight of all saccharides.
5. A process for producing a beverage, which comprises the following steps (i) to (iii):
   (i) adjusting the makeup of saccharides in the beverage such that the total weights of mono-, di- and trisaccharides contained in the beverage account for 75% or more of the total weight of all saccharides contained in the beverage;
   (ii) adjusting the concentrations of the di- and trisaccharides in the beverage such that the ratio of the total weight of the disaccharides to that of the trisaccharides in the beverage is from 5:1 to 9:10; and
   (iii) adjusting the osmotic pressure of the beverage to lie from 30 to 130 mOsm/KG.

### ADVANTAGEOUS EFFECTS OF INVENTION

The beverages of the present invention are suited to the way of drinking in small quantities over a prolonged period in order to alleviate the dryness of the mouth. Specifically, they are beverages that provide a comfortable mouthfeel, provide a pleasant aftertaste, and can be enjoyed even when they are lukewarm and which therefore bring consumers to feel like drinking them over and over again without becoming satiated. Beverages "provide a comfortable mouthfeel" if they "can be sipped without causing any stimulation or strange feeling but presenting a mild feel to the mouth" and they "provide a pleasant aftertaste" if they "are free from any heaviness or stickiness that might be present in the aftertaste at the end of drinking but keep moisture in the mouth."

### DESCRIPTION OF EMBODIMENTS

The beverages of the present invention have specified osmotic pressures and feature specified saccharide makeups.

### (Osmotic pressure)

The beverages of the present invention have osmotic pressures of from 30 to 130 mOsm/KG. If their osmotic pressures are outside this range, the present invention may fail to exhibit the intended effects. Preferred osmotic pressures may be exemplified by the range of from 40 to 125 mOsm/KG, or from 40 to 120 mOsm/KG.

It should be noted here that conventional mineral waters and green tea beverages have osmotic pressures that are approximately from 1 to 25 mOsm/KG. Products of "Flavored water" which are flavored and have a slightly sweet taste are also available on the market but their osmotic pressures are usually 200 mOsm/KG and higher.

A comfortable condition where the oral cavity is not dry may be described as a state where saliva spreads throughout the oral cavity, keeping moisture in it. Although not wishing that the scope and mechanism of the present invention are bound by any theory, the osmotic pressure of saliva is said to be about one half the osmotic pressure of the bodily fluid and fluids having low osmotic pressures that approximate the osmotic pressure of saliva are close to a steady state when they are sipped, which presumably leads to the comfortable mouthfeel and other effects of the present invention.

Osmotic pressures may be adjusted by controlling the amount of the solute in the beverage. This control may be effected by any known method.

Osmotic pressures may be measured by any known method. For example, OSMO STATION™ OM-6060, an automatic osmometer produced by ARKRAY, Inc., may be employed.

### (Saccharides)

The beverages of the present invention contain saccharides. The "saccharides" as used herein refers to mono-, di-, and trisaccharides, as well as polysaccharides having polymerization degrees of four and more (which may hereinafter sometimes be designated by "tetra- and higher polysaccharides" or similar terms). The beverages of the present invention contain di- and trisaccharides and may further contain monosaccharides and/or polysaccharides having polymerization degrees of four and more. The "monosaccharides" as used herein has the ordinary meaning used in the technical field to which the present invention belongs. The monosaccharides to be used in the present invention include, but are not limited to, glucose, galactose, mannose, fructose, etc. Preferred monosaccharides are glucose and fructose. The beverages of the present invention may contain only one of these monosaccharides independently or, alternatively, they may contain two or more of these monosaccharides. The terms "disacchardies" and "trisaccharides" as used herein respectively mean saccharides consisting of two or three monosaccharide molecules that are linked to each other by glycosidic bonds. The disaccharides to be used in the present invention include, but are not limited to, maltose, sucrose, lactose, trehalose, cellobiose, etc. Preferred disaccharides are maltose and/or sucrose. The beverages of the present invention may contain only one of these disaccharides independently or, alternatively, they may contain two or more of these disaccharides. The trisaccharides to be used in the present invention include, but are not limited to, maltotriose, raffinose, nigerotriose, etc. A preferred trisaccharide is maltotriose. The beverages of the present invention may contain only one of these trisaccharides independently or, alternatively, they may contain two or more of these trisaccharides. The polysaccharides having polymerization degrees of four and more as used herein include dextrin and starch, for example.

The total weights of mono-, di- and trisaccharides contained in the beverages of the present invention account for 75% or more of the total weight of all saccharides in the beverage. Below 75%, the present invention may fail to exhibit the intended effects. For example, the saccharides having polymerization degrees of four or more may sometimes attenuate the effects of the present invention. The total weights of mono-, di- and trisaccharides contained in the beverages of the present invention preferably account for at least 77%, preferably at least 80%, of the total weight of all saccharides in the beverage.

The ratio of the total weight of disaccharides to that of trisaccharides, as contained in the beverages of the present invention, is from 5:1 to 9:10. If the proportion of the disaccharides is higher than this range, the beverages may feel watery to the mouth, thereby presenting a strange feeling; if the proportion of the trisaccharides is higher than this range, the beverages may feel too heavy to the mouth and present a poor aftertaste at the end of drinking. The ratio of the total weight of the disaccharides to that of the trisaccharides is preferably from 4:1 to 1:1, from 4.5:1 to 1:1, for example.

The ratio of the total weight of monosaccharides to that of all saccharides contained in the beverages of the present invention is not particularly limited but it is preferably from 1.0 to 80%, more preferably from 2.0 to 70%. If the ratio of interest is lower than this range, the comfortable mouthfeel of the beverages may sometimes be affected; if the ratio is higher than the indicated range, the beverages will have a heavy aftertaste.

The types of saccharides to be contained in the beverages of the present invention are not particularly limited but in order to materialize the intended effects of the present invention, such as the consumer's feeling like tasting the inventive beverages over and over again, the saccharides are preferably contained in the beverages in specified proportions. For example, the total content of all saccharides per 100 g of the beverages is preferably from 0.5 to 10 g, more preferably from 0.5 to 8 g.

The total content of trisaccharides to be contained in the beverages of the present invention is not particularly limited but in order to materialize the intended effects of the present invention, such as the comfortable mouthfeel, the trisaccharides are preferably contained in the beverages in specified proportions. For example, the total content of trisaccharides per 100 g of the beverage is preferably from 0.05 to 2.70 g, more preferably from 0.10 g to 2.50 g.

The total content of disaccharides to be contained in the beverages of the present invention is not particularly limited but it typically ranges from 0.2 to 5.0 g per 100 g of the beverage.

The total content of monosaccharides to be contained in the beverages of the present invention is not particularly limited but in order to materialize the intended effects of the present invention, such as a pleasant aftertaste, the monosaccharides are preferably contained in the beverages in specified proportions. Typically, the total content of monosaccharides per 100 g of the beverage ranges from 0.02 to 2.0 g.

The concentrations of all saccharides in the beverages, their proportions and makeups may be adjusted by any known methods.

The total weight of all saccharides may also be measured by any known method and the phenol-sulfuric acid method is applicable. A specific operating procedure is as follows: a test tube is charged with 1 ml of a sample beverage and 1 ml of a phenol reagent (5% (w/v) phenol in water); after thorough stirring, 5 ml of conc. sulfuric acid (guaranteed quality) is added, immediately followed by vigorous agitation for 10 seconds; thereafter, the mixture is left to stand at room temperature for 20 minutes or more until it becomes sufficiently cool and the absorbance at a wavelength of 490 nm is measured with a spectrophotometer; using a calibration curve constructed by the same procedure with D-glucose as a reference compound, the concentrations of all saccharides contained in the beverage can be measured. The contents of mono-, di- and trisaccharides can individually be measured by any known methods, among which HPLC is applicable.

### (Other components)

The beverages of the present invention may contain other components commonly employed in beverages so long as they will not cause any adverse impacts on the effects of the invention. Examples of such optional components include antioxidants, flavors, minerals, pigments, preservatives, seasonings (flavors), sweeteners, acidulants, bittering agents, catechins, pH modifiers, and quality stabilizers. Carbonic acid may also be contained if its inclusion is not so great as to cause any adverse impacts on the effects of the invention.

The "minerals" as mentioned above refers to sodium, potassium, calcium, magnesium, iron and other minerals that are commonly employed in beverages. If the contents of minerals are excessive, they can cause adverse impacts on the effects of the present invention. For example, if the sodium content is excessive, the consumer may sometimes feel a slimy or uncomfortable aftertaste upon sipping the beverage. The sodium concentration in the beverages of the present invention is preferably less than 30 mg/100 mL, more preferably less than 20 mg/100 mL. The contents of sodium and other mineral components may be measured by any known methods.

The "bittering agents" refers to caffeine, naringin, etc. that are commonly employed in beverages. If the contents of bittering agents are excessive, they can cause adverse impacts on the effects of the present invention. For example, if the content of caffeine is excessive, it can impart a bitterness to the aftertaste. What is more, caffeine which has a suppressive action on saliva prevents the inside of the mouth from becoming adequately moist and can hence make the beverage have a less comfortable mouthfeel. The caffeine concentration in the beverages of the present invention is preferably not greater than 40 mg/100 mL, more preferably not greater than 30 mg/100 mL. The caffeine content may be measured by any known method. Included among bittering agents are ingredients such as spices that impart strong stimulation even if they are contained in very small amounts and they are considered to be unfavorable from such viewpoints as the comfortable mouthfeel.

If catechins contained in the beverages of the present invention are excessive, they will present a pungent or astringent aftertaste, potentially affecting such properties as a feel to the mouth. The catechin content is preferably not greater than 30 mg/100 mL, more preferably not greater than 20 mg/100 mL. The "catechins" as used herein means catechin compounds as yet-to-be polymerized monomers, including (+)-catechin, (-)-epicatechin, (+)-gallocatechin, (-)-epigallocatechin, (-)-catechin gallate, (-)-epicatechin gallate, (-)-gallocatechin gallate, and (-)-epigallocatechin gallate. When the content of catechins is cited herein, the total content of those monomeric catechin comounds is meant. The catechin content may be measured by any known methods. For example, HPLC may be employed.

### (pH)

The pH of the beverages, whether it is too high or low, can affect such properties as the comfortable mouthfeel. The pH of the beverages of the present invention may preferably range from 3.0 to 7.0, for example.

### (Exemplary beverages)

The beverages of the present invention are not particularly limited as long as they can exhibit the comfortable mouthfeel and other effects of the present invention. They include beverages known as "soft drinks", for example, "Flavored water," carbonated drinks (excluding non-alcoholic, beer-taste beverages), coffee, fruit juice drinks, mineral water, tea beverages (green tea beverages, blended tea beverages, black tea beverages, and oolong tea beverages), etc. Preferred beverages arc "Flavored water" and/or tea beverages. The "Flavored water" here mentioned refers to beverages that consist of water supplemented with traces of nutrients, fruit juice, flavors, etc. and which are processed to be less sweet than common soft drinks. The calorific value of the present beverages is not particularly limited and it is preferably less than 30 kcal, more preferably less than 20 kcal. It should be noted that the beverages of the present invention do not include beverages having alcohol contents of 1% and higher.

### (Beverages filled in containers)

The beverages of the present invention are characterized in that consumers feel like drinking them over and over again, so they are preferably supplied as being filled in containers. The containers may be any ordinary items including glass bottles, PET bottles, metal cans, etc. Particularly preferred are containers with caps that can be fitted over again. Such beverages filled in containers may be sterilized with heat.

### (Production of beverages)

The beverages of the present invention can be produced by combining techniques known to skilled artisans. In the process of producing the beverages of the present invention, it is important that the following three steps be performed: (i) adjusting the makeup of saccharides in the beverage such that the total weights of mono-, di- and trisaccharides contained in the beverage account for 75% or more of the total weight of all saccharides contained in the beverage; (ii) adjusting the concentrations of the di- and trisaccharides in the beverage such that the ratio of the total weight of the disaccharides to that of the trisaccharides in the beverage is from 5:1 to 9:10; and (iii) adjusting the osmotic pressure of the beverage to lie from 30 to 130 mOsm/KG, and by these steps the beverage's mouthfeel and aftertaste can be improved and one can obtain beverages that maintain good taste even when they are lukewarm and which bring consumers to feel like drinking them over and over again without becoming satiated. Hence, the process for producing the beverages of the present invention may, in another aspect, be a method for improving the mouthfeel and/or aftertaste of beverages or a method by which beverages are provided with such characteristics that they maintain good taste even when they are lukewarm and bring consumers to feel like drinking them over and over again without becoming satiated. In these methods, the mineral concentrations, caffeine, and catechin contents in the beverages may be adjusted as required. The methods of adjusting these values and the more specific numerical ranges that may be adopted have already been described above. As long as the effects of the present invention are attained, the order in which the above-described steps are to be performed and their timings are not limited. Each of these steps may be performed more than once. All that is needed is that the finally obtained beverage should satisfy the requirements specified by the numerical ranges set forth above.

Finally, for clarification purposes, it should be remarked that each of the numerical ranges described herein includes the upper and lower limits cited to indicate that range (for example, the range represented by "from 1 to 2" includes both numerals 1 and 2.)

### EXAMPLES

On the pages that follow, the present invention will be described by reference to Examples but it should be understood that the present invention is by no means limited by these Examples.

### EXMPLE 1 (Osmotic Pressure)

To find out osmotic pressure ranges for materializing a comfortable mouthfeel or a pleasant aftertaste as two important characteristics of beverages that can be drunk in small quantities over a prolonged period, a plurality of beverage samples were prepared that had the same saccharide makeup but different osmotic pressures.

Using OLIGOTOSE (SANWA STARCH CO., LTD.) comprising 1.8 wt% monosaccharides, 32.6 wt% disaccharides (mostly maltose), 44.7 wt% trisaccharides (mostly maltotriose) and 20.9 wt% tetra- and higher polysaccharides, and HIGH MALTOSE (liquid; Nippon Cornstarch Corporation) comprising 5.1 wt% monosaccharides and 88.3 wt% disaccharides (mostly maltose), solutions having varying osmotic pressures (0-150 mOsm/KG) were prepared in accordance with the recipes shown in Table 1. These solutions had pH of about 6.0. Subsequently, the solutions were filled into bottles and then cooled to make a plurality of beverage samples. In all beverage samples obtained (except the one with 0 mOsm/KG), the total weights of di- and trisacahrides were at a ratio of 5:4. The recipes of the respective solutions are shown in Table 1. In all beverage samples except the one having an osmotic pressure of 0 mOsm/KG, the proportions of the total weights of the respective saccharides in that of all saccharides contained were as follows: monosaccharides, 2.5%; disaccharides, 44.6%; trisaccharides, 36.0%; tetra- and higher polysaccharides, 16.8%; the sum of mono- to trisaccharides, 83.2%.

A sensory evaluation was made of the respective beverage samples. Specifically, five trained panelists drank each beverage sample, gave its overall rating for a comfortable mouthfeel and a pleasant aftertaste on a 5-point scoring system (point 1: considerably poor in comparison with water (osmotic pressure, 0 mOsm/KG); point 2: poor in comparison with water; point 3: comparable to water; point 4: better than water; point 5: much better than water), and the results were averaged for the 5 panelists. The panelists also rated the respective beverage samples by making free comments. The results are shown in Table 2, which indicate that beverage sampless having characteristics suitable for drinking in small quantities over a prolonged period are obtained in the osmotic pressure range of from 30 to 130 mOsm/KG, in particular, from 40 to 125 mOsm/KG.

**[Table 1]**

| | | | | | | | | | | | | | |
|---|---|---|---|---|---|---|---|---|---|---|---|---|---|
| Osmotic pressure (mOsm/KG) | 0 | 10 | 20 | 30 | 40 | 50 | 100 | 110 | 120 | 125 | 130 | 140 | 150 |
| HIGH MALTOSE (g) | 0.00 | 0.42 | 0.84 | 1.26 | 1.68 | 2.10 | 4.20 | 4.62 | 5.04 | 5.25 | 5.46 | 5.88 | 6.30 |
| OLIGOTOSE (g) | 0.00 | 1.62 | 3.23 | 4.85 | 6.46 | 8.08 | 16.16 | 17.78 | 19.39 | 20.20 | 21.01 | 22.62 | 24.24 |
| 1% VC solution (g) | 5 | | | | | | | | | | | | |
| 1% sodium bicarbonate solution (g) | 3.15 | | | | | | | | | | | | |
| Total amount (g) | 500 | | | | | | | | | | | | |

**[Table 2]**

| Osmotic pressure (mOsm/KG) | Average rating score | Free comments |
|---|---|---|
| 0 | 3.0 | Saliva washed away. Unpleasant taste with the sense of incongruity. |
| 10 | 3.2 | |
| 20 | 3.5 | |
| 30 | 4.0 | |
| 40 | 4.2 | |
| 50 | 4.6 | |
| 100 | 4.7 | |
| 110 | 4.4 | |
| 120 | 4.3 | The feeling that a tongue is mildly coated in delicate sweetness. The taste disappears immediately. |
| 125 | 4.3 | Smooth touch to the tongue. |
| 130 | 4.0 | Slightly heavy on the tongue. |
| 140 | 3.5 | Very sweet. With a thick taste left on the tongue after tasting. |

All beverage samples were analyzed for osmotic pressure with OSMO STATION™ OM-6060, an automatic osmometer produced by ARKRAY, Inc. Specifically, the ice-crystal forming temperature of each specimen was determined and its osmotic pressure was calculated from a standard curve constructed by calibration. The saccharides in each beverage were analyzed through measurement by the phenol-sulfuric acid method, and analyses of mono-, di- and trisaccharides were conducted by HPLC under the following conditions.

### <Saccharide makeup analysis>

HPLC apparatrus: Agilent 1290 Series
Detector: ESA Corona Ultra (product of Dionex, Inc.)
Mobile phase: Solution A, water/methanol = 2.5/97.5
   Solution B, acetonitrile
Gradient conditions: 0-4 min, Solution B 60%
   10-11.5 min, Solution B 0%
Flow rate: 1.2 mL/min
Equilibration time: 5 min
Columns: The following columns were used in series.
   Upstream: Imtakt Unison UK-Amino HT, 3 µm, 250 x 3 mm
   Downstream: Imtakt Unison UK-Amino. 3 µm, 250 x 3 mm
Column temperature: 65°C
Injection volume: 2 µL

### EXMPLE 2 (Saccharide Makeup)

To find out saccharide makeup for materializing a comfortable mouthfeel or a pleasant aftertaste as two important characteristics of beverages that can be drunk in small quantities over a prolonged period, a plurality of beverage samples were prepared that had different disaccharide-to-trisaccharide ratios.

Saccharide makeup was adjusted by varying the proportions of HIGH MALTOSE and OLIGOTOSE used in Example 1. Osmotic pressure was adjusted chiefly by controlling the amounts of these saccharides. Based on the results of Example 1, the osmotic pressure was selected at values that were able to bring a comfortable mouthfeel, i.e., 30 mOsm/KG, 50 mOsm/KG, 100 mOsm/KG, and 130 mOsm/KG. Solutions were prepared in accordance with the recipes shown in Tables 3 to 6. For the solutions having osmotic pressures of 30 mOsm/KG and 130 mOsm/KG, the contents of the respective saccharides are also indicated. All solutions had pH of about 6.0. Subsequently, the solutions were filled into container bottles and then cooled to make beverage samples of various saccharide makeups. Methods of analysis for osmotic pressure and saccharide amounts were as described in Example 1.

A sensory evaluation was made of the respective beverages. The method and criteria for evaluation were as described in Example 1. The relative proportions of di- and trisaccharides in the respective beverages and the results of their sensory evaluation are shown in Table 7, which indicates that beverages having characteristics suitable for drinking in small quantities over a prolonged period can be obtained when the ratio of the total weight of disaccharides to that of trisaccharides is from 5:1 to 9:10, preferably from 4.5:1 to 1:1 or from 4:1 to 1:1.

**[Table 3]**

| | | | | | | | | | | | |
|---|---|---|---|---|---|---|---|---|---|---|---|
| Osmotic pressure (mOsm/KG) | 30 | | | | | | | | | | |
| Disaccharides: trisaccharides (wt) | 100:1 | 91:1 | 87:13 | 83:17 | 79:21 | 69:31 | 60:40 | 55:45 | 53:47 | 51:49 | 42:82 |
| HIGH MALTOSE (g) | 5.00 | 4.29 | 4.00 | 3.67 | 3.33 | 2.50 | 1.67 | 1.25 | 1.00 | 0.83 | 0.00 |
| OLIGOTOSE (g) | 0.00 | 0.92 | 1.29 | 1.73 | 2.16 | 3.23 | 4.31 | 4.85 | 5.17 | 5.39 | 6.47 |
| 1% VC solution (g) | 5 | | | | | | | | | | |
| 1% sodium bicarbonate solution (g) | 3.15 | | | | | | | | | | |
| Total amount (g) | 500 | | | | | | | | | | |
| Monosaccharide content (/100 g) | 0.05 | 0.05 | 0.05 | 0.04 | 0.04 | 0.04 | 0.03 | 0.03 | 0.03 | 0.03 | 0.02 |
| Disaccharide content (g/100 g) | 0.88 | 0.82 | 0.79 | 0.76 | 0.73 | 0.65 | 0.58 | 0.54 | 0.51 | 0.50 | 0.42 |
| Trisaccharide content (g/100 g) | 0.00 | 0.08 | 0.12 | 0.15 | 0.19 | 0.29 | 0.39 | 0.43 | 0.46 | 0.48 | 0.58 |
| Total saccharide content (g/100 g) | 0.93 | 0.99 | 1.01 | 1.03 | 1.05 | 1.11 | 1.17 | 1.20 | 1.22 | 1.23 | 1.29 |

**[Table 4]**

| | | | | | | | | | | | |
|---|---|---|---|---|---|---|---|---|---|---|---|
| Osmotic pressure (mOsm/KG) | 50 | | | | | | | | | | |
| Disaccharides: trisaccharides (wt) | 100:1 | 91:1 | 87:13 | 83:17 | 79:21 | 69:31 | 60:40 | 55:45 | 53:47 | 51:49 | 42:82 |
| HIGH MALTOSE (g) | 8.3 | 7.1 | 6.7 | 6.3 | 5.6 | 4.2 | 2.8 | 2.1 | 1.7 | 1.4 | 0.0 |
| OLIGOTOSE (g) | 0.00 | 1.54 | 2.16 | 2.69 | 3.59 | 5.39 | 7.18 | 8.08 | 8.62 | 8.98 | 10.78 |
| 1 % VC solution (g) | 5 | | | | | | | | | | |
| 1% sodium bicarbonate solution (g) | 3.15 | | | | | | | | | | |
| Total amount (g) | 500 | | | | | | | | | | |

**[Table 5]**

| | | | | | | | | | | | |
|---|---|---|---|---|---|---|---|---|---|---|---|
| Osmotic pressure (mOsm/KG) | 100 | | | | | | | | | | |
| Disaccharides: trisaccharides (wt) | 100:1 | 91:1 | 87:13 | 83:17 | 79:21 | 69:31 | 60:40 | 55:45 | 53:47 | 51:49 | 42:82 |
| HIGH MALTOSE (g) | 16.7 | 14.3 | 13.3 | 12.5 | 11.1 | 8.3 | 5.6 | 4.2 | 3.3 | 2.8 | 0.0 |
| OLIGOTOSE (g) | 0.00 | 3.08 | 4.31 | 5.39 | 7.18 | 10.78 | 14.37 | 16.16 | 17.24 | 17.96 | 21.55 |
| 1% VC solution (g) | 5 | | | | | | | | | | |
| 1% sodium bicarbonate solution (g) | 3.15 | | | | | | | | | | |
| Total amount (g) | 500 | | | | | | | | | | |

**[Table 6]**

| | | | | | | | | | |
|---|---|---|---|---|---|---|---|---|---|
| Osmotic pressure (mOsm/KG) | 130 | | | | | | | | |
| Disaccharides: trisaccharide (wt) | 100:1 | 87:13 | 83:17 | 79:21 | 69:31 | 51:49 | 49:51 | 45:55 | 42:82 |
| HIGH MALTOSE (g) | 21.7 | 17.3 | 15.9 | 14.4 | 10.8 | 3.61 | 2.71 | 1.35 | 0.00 |
| OLIGOTOSE (g) | 0 | 5.60 | 7.5 | 9.3 | 14.0 | 23.3 | 24.5 | 26.3 | 28.0 |
| 1% VC solution (g) | 5 | | | | | | | | |
| 1% sodium bicarbonate solution (g) | 3.15 | | | | | | | | |
| Total amount (g) | 500 | | | | | | | | |
| Monosaccharide content (g/100 g) | 0.22 | 0.20 | 0.19 | 0.18 | 0.16 | 0.12 | 0.12 | 0.11 | 0.10 |
| Disaccharide content (g/100 g) | 3.83 | 3.43 | 3.29 | 3.16 | 2.83 | 2.16 | 2.08 | 1.95 | 1.83 |
| Trisaccharide content (g/100 g) | 0.00 | 0.50 | 0.67 | 0.83 | 1.25 | 2.09 | 2.19 | 2.35 | 2.50 |
| Total saccharide content (g/100g) | 4.005 | 4.36 | 4.46 | 4.57 | 4.83 | 5.34 | 5.41 | 5.51 | 5.60 |

**[Table 7]**

| | | | | | | | | | | | | | |
|---|---|---|---|---|---|---|---|---|---|---|---|---|---|
| Disaccharides: trisaccharides (wt) | 100:1 | 91:1 | 87:13 | 83:17 | 79:21 | 69:31 | 60:40 | 55:45 | 53:47 | 51:49 | 49:51 | 45:55 | 42:82 |
| Osmotic pressure 30 mOsm/KG | 3.4 | 3.4 | 3.6 | 4.0 | 4.0 | 4.1 | 4.2 | 4.3 | 4.3 | 4.1 | - | - | 3.8 |
| | Hard feeling on the tongue. Almost like a water. | | Somewhat sticky to the tongue. | | Slightly sticky to the tongue. Flows down the throat smoothly . | With comfortable mouthfeel. Has no lingering aftertaste. | | | Comfortable mouthfeel and feels to vanish. | | - | - | Hard feeling on the tongue. Heavy feeling. |
| Osmotic pressure 50 mOsm/KG | 3.5 | 3.3 | 3.7 | 4.1 | 4.2 | 4.0 | 4.2 | 4.5 | 4.6 | 4.7 | - | - | 3.7 |
| Osmotic pressure 100 mOsm/KG | 3.7 | 3.3 | 3.8 | 4.1 | 4.2 | 4.5 | 4.8 | 5.0 | 4.6 | 4.3 | - | - | 3.6 |
| Osmotic pressure 130 mOsm/KG | 4.3 | - | 3.7 | 4.0 | 4.0 | 4.3 | - | - | - | 4.1 | 4.1 | 3.8 | 3.5 |
| | Burden in the throat. Lingering sugary aftertaste makes the beverage difficult to drink. | - | Lingering sugary aftertaste. | | Smooth but lingering sugary aftertaste. | Vanishes smoothly. Natural mouthfeel. | - | - | - | Vanishes smoothly. Natural mouthfeel but somewhat heavy feeling. | Somewhat lingering in the mouth, but not to a disturbing level. | Stuck in the throat. Somewhat lingering on the tongue. Heavy feeling. | Persistent sweetness on the tongue. Feels rather heavy feeling, |
| Monosaccharides/ total saccharides (%) | 5.5 | 4.8 | 4.5 | 4.2 | 4.0 | 3.3 | 2.8 | 2.5 | 2.4 | 2.3 | 2.1 | 2.0 | 1.8 |
| Disaccharides/ total saccharides (%) | 94.5 | 83.0 | 78.6 | 73.9 | 69.2 | 58.6 | 49.1 | 44.6 | 42.1 | 40.4 | 38.4 | 35.4 | 32.6 |
| trisaccharides/ total saccharides (%) | 0.0 | 8.3 | 11.5 | 14.9 | 18.3 | 25.9 | 32.8 | 36.0 | 37.9 | 39.1 | 40.5 | 42.6 | 44.7 |
| Sum of mono- to trisaccharides/ total saccharides (%) | 100.0 | 96.1 | 94.6 | 93.0 | 91.4 | 87.9 | 84.7 | 83.2 | 82.3 | 81.7 | 81.1 | 110.1 | 79.1 |

Percentages in the Table refer to wt%.

### Example 3 ("Flavord Water" Production 1)

"Flavored water" samples 1 to 3 were produced in accordance with the recipes shown in Table 8 to provide an osmotic pressure of 120 mOsm/KG in each sample. The beverage samples were each filled into a 500-mL PET bottle and then cooled. "POCARI SWEAT" (Otsuka Pharmaceutical Co., Ltd.) was available on the market. "SANDEC #150" (Sanwa Starch Co., Ltd.) was a saccharide composition comprising 1 wt% monosaccharides, 5.7 wt% disaccharides, 8.8 wt% trisaccharides, and 84.5 wt% tetra- and higher polysaccharides. Table 8 also cites the contents and relative proportions of the respective saccharides in each beverage sample. The osmotic pressures and saccharide amounts of the prepared beverage samples were analyzed by the methods described in Example 1.

**[Table 8]**

| | "Flavored water" 1 | "Flavored water" 2 | "Flavored water" 3 |
|---|---|---|---|
| POCARI SWEAT (g) | 100 | 100 | 100 |
| Fructose (g) | 5.23 | 0 | 0 |
| Glucose (g) | 6.37 | 0 | 0 |
| Sucrose (g) | 7.2 | 0 | 0 |
| HIGH MALTOSE (g) | 0 | 4.98 | 0 |
| OLIGOTOSE (g) | 0 | 32.3 | 0 |
| SANDEC #150 (g) | 0 | 0 | 87 |
| Total amount (g) | 1000 | 1000 | 1000 |
| Monosaccharides (g/100 g) | 1.53 | 0.37 | 0.46 |
| Disaccharides (g/100 g) | 1.00 | 1.72 | 0.72 |
| Trisaccharides (g/100 g) | 0 | 1.45 | 0.77 |
| Total saccharides (g/100 g) | 2.53 | 4.21 | 9.30 |
| Sum of mono-to trisaccharides/ total saccharides (%) | 100 | 84 | 21 |
| Disaccharides:trisaccharides (wt) | 100:0 | 54:46 | 49:51 |

Percentages in the Table refer to wt%.

A sensory evaluation was made of the respective beverage samples. In an office room air-conditioned by heating at about 27°C, four panelists (A to D) kept drinking "Flavored water" sample 1 (in 500-mL PET bottles) by sipping portions in easy-to-drink amounts and at speeds where they were able to drink comfortably (approx. 50-300 minutes/bottle), one portion at a time, until they drank a full bottle (500 mL). Details of the sensory evaluation are described below. The same sensory evaluation was made of "Flavored water" samples 2 and 3 but on different days.

Upon each sipping, panelists A and B were asked to evaluate "Flavored water" samples 1 to 3 for three items on a 4-point scoring system until they drank up each sample. The three items were: mouthfeel (point 1, poor; point 2, fair; point 3, good; point 4, very good); heaviness of aftertaste (point 1, heavy; point 2, fairly heavy; point 3, light; point 4, very light), and stickiness of aftertaste (point 1, sticky; point 2, fairly sticky; point 3, non-sticky; point 4, not sticky at all). The results are shown in Table 9.

Panelists A to D were asked to evaluate their preference, both at the start and end of drinking, on a 7-point scoring system (point 7, I like it very much; point 6, I like it; point 5, I fairly like it; point 4, Can not say; point 3, I fairly dislike it; point 2, I dislike it; point 1, I dislike it very much); at the end of drinking, they also described by free comments how they felt when they drank a full bottle. Furthermore, an index for determining whether a beverage would bring the panelist to feel like drinking it over and over again without becoming satiated was represented by [(the score of preference at the end of drinking) - (the score of preference at the start of drinking) = (change in preference between the start and end of drinking)]. Consider, for example, a beverage for which the score at the start of drinking is point 5 and the score at the end of drinking is 3; since the index is [3-5 = -2], it can safely be said that this beverage decreases in preference as it is continually drunken, or that it is not a beverage that brings the panelist to feel like drinking it over and over again. The results of the evaluation test are shown in Table 10.

"Flavored water" sample 2 of the present invention, in comparison with "Flavored water" sample 1 that contained only mono- and disaccharides added to a diluted conventional sports drink (with no trisaccharides contained) and "Flavored water" sample 3 that had a lower ratio of the sum of mono- to trisaccharides to the total saccharides, was superior having a comfortable mouthfeel and a pleasant aftertaste (neither heavy nor sticky). A further problem with "Flavored water" samples 1 and 3 was that as they were continually drunken, the rating on these items decreased gradually and the preference after drinking 500 mL also had a tendency to decrease from the level at the start of drinking. On the other hand, "Flavored water" sample 2 of the present invention, when drunk continually, remained almost the same or even improved in terms of the comfortable mouthfeel and so on, what is more, the preference after drinking 500 mL was comparable to or even higher than at the start of drinking.

**[Table 9]**

| Panelist A | | | | | | | | | | | | | |
|---|---|---|---|---|---|---|---|---|---|---|---|---|---|
| | Description | 1^{st} sip | 2^{nd} sip | 3^{rd} sip | 4^{th} sip | 5^{th} sip | 6^{th} sip | 7^{th} sip | 8^{th} sip | 9^{th} sip | 10^{th} sip | 11^{th} sip | sip |
| "Flavored water" 1 | Mouthfeel | 3 | 3 | 3 | 3 | 3 | 3 | 3 | 3 | 3 | 3 | | |
| | Heaviness of aftertaste | 3 | 3 | 3 | 3 | 3 | 2 | 2 | 2 | 2 | 2 | | |
| | Stickiness of aftertaste | 4 | 3 | 3 | 3 | 3 | 3 | 2 | 2 | 2 | 2 | | |
| "Flavored water" 2 | Mouthfeel | 4 | 4 | 4 | 4 | 4 | 4 | 4 | 4 | 4 | 4 | 4 | 4 |
| | Heaviness of aftertaste | 4 | 4 | 4 | 4 | 4 | 4 | 4 | 4 | 4 | 4 | 4 | 4 |
| | Stickiness of aftertaste | 3 | 3 | 3 | 4 | 4 | 4 | 4 | 3 | 4 | 4 | 4 | 4 |
| "Flavored water" 3 | Mouthfeel | 4 | 4 | 4 | 4 | 4 | 4 | 3 | | | | | |
| | I leaviness of aftertaste | 3 | 3 | 3 | 3 | 3 | 2 | 2 | | | | | |
| | Stickiness of aftertaste | 3 | 3 | 3 | 3 | 3 | 3 | 3 | | | | | |

| Panelist B | | | | | | | | | | | | | |
|---|---|---|---|---|---|---|---|---|---|---|---|---|---|
| | Description | 1^{st} sip | 2^{nd} sip | 3^{rd} sip | 4^{th} sip | 5^{th} sip | 6^{th} sip | 7^{th} sip | 8^{th} sip | 9^{th} sip | 10^{th} sip | 11^{th} sip | |
| "Flavored water" 1 | Mouthfeel | 2 | 2 | 2 | 1.5 | 1.5 | 2 | 2 | 2 | 2 | | | |
| | Heaviness of aftertaste | 2 | 2 | 2 | 2 | 2 | 2 | 2 | 2 | 2 | | | |
| | Stickiness of aftertaste | 1.5 | 1.5 | 1.5 | 1.5 | 1.5 | 2 | 2 | 3 | 2 | | | |
| "Flavored water" 2 | Mouthfeel | 2 | 3 | 3 | 2 | 2 | 2 | 3 | 3 | 3 | 3 | 3 | |
| | Heaviness of aftertaste | 2.5 | 2.5 | 2.5 | 2 | 2 | 2 | 3 | 3 | 2.5 | 3 | 3 | |
| | Stickiness of aftertaste | 2 | 2 | 2 | 1.5 | 1.5 | 1.5 | 3 | 3 | 3 | 3 | 3 | |
| "Flavored water" 3 | Mouthfeel | 3 | 3 | 3 | 2 | 2 | 2 | 2 | 2 | 2 | 1 | 1 | |
| | Heaviness of aftertaste | 2 | 2 | 2 | 1.5 | 1.5 | 2 | 1.5 | 1.5 | 1 | 1 | 1 | |
| | Stickiness of aftertaste | 3 | 3 | 3 | 3 | 3 | 3 | 2.5 | 2 | 1.5 | 1.5 | 1.5 | |

**[Table 10]**

| Beverage | Panelist | Start of drinking (score) | | End of drinking (score) | Change in preference | Free comments |
|---|---|---|---|---|---|---|
| "Flavored water " 1 | A | 6 | → | 4 | -2 | As drinking proceeded, the sugary aftertaste became disturbing. |
| | B | 4 | → | 2 | -2 | As more than half of the bottle was drunk, further drinking became difficult. |
| | C | 4 | → | 4 | 0 | As drinking proceeded, it got sweet in the mouth, giving a sense of having a dry throat. |
| | D | 3 | → | 4 | +1 | As drinking proceeded, the throat got a little uncomfortable. |
| "Flavored water" 2 | A | 6 | → | 6 | 0 | Because of comfortable mouthfeel, drinking was possible without stress. |
| | B | 4 | → | 5 | +1 | Becoming lukewarm in the latter half of drinking, the beverage gave a more tender feeling. |
| | C | 5 | → | 5 | | Could be very drinkable. |
| | D | 5 | → | 6 | 0 | Felt the beverage permeating tenderly into the mouth to the last sip. The inside of a dry mouth could be moistened without stress. |
| "Flavored water" 3 | A | 3 | → | 2 | -1 | The first sip felt pleasant in the mouth but it lingered on the tongue and as drinking continued, a stronger sense of stickiness developed on the tongue. |
| | B | 3 | → | 2 | -1 | As drinking proceeded, the beverage became heavy to give a gloomy mood. |
| | C | 4 | → | 3 | -1 | As drinking proceeded, a strange sugary taste accumulated in the mouth, giving a heavy feeling. |
| | D | 3 | → | 4 | +1 | Less comfortable mouthfeel was felt. |

### Example 4 ("Flavored Water" Production 2)

"Flavored water" samples 4 and 5 were produced in accordance with the recipes shown in Table 11 to provide an osmotic pressure of 120 mOsm/KG in each sample. The beverage samples were each filled into a 500-mL PET bottle and then cooled. Table 11 also cites the contents and relative proportions of the respective saccharides in each beverage. The osmotic pressures and saccharide amounts of the prepared beverage samples were analyzed by the methods described in Example 1.

**[Table 11]**

| | "Flavored water" 4 | "Flavored water" 5 |
|---|---|---|
| POCARI SWEAT (g) | 100 | 100 |
| HIGH MALTOSE (g) | 4.39 | 4.62 |
| OLIGOTOSE (g) | 28.5 | 30.0 |
| SANDEC #150 (g) | 10.3 | 6.3 |
| Total amount (g) | 1000 | 1000 |
| Monosaccharides (g/100 g) | 0.45 | 0.45 |
| Disaccharides (g/100 g) | 1.60 | 1.65 |
| Trisaccharides (g/100 g) | 1.36 | 1.36 |
| Total saccharides (g/100 g) | 4.88 | 4.62 |
| Sum of mono-to trisaccharides/ total saccharides (%) | 70 | 75 |
| Disaccharides:trisaccharides (wt) | 54:46 | 55:45 |

Percentages in the Table refer to wt%.

A sensory evaluation was made of the respective beverage samples. Three panelists drank one bottle each of "Flavored water" sample 4 and "Flavored water" sample 5 and evaluated their preference for the respective beverage samples on a 3-point scoring system (o, I like it; Δ, fair; ×, I don't like it), together with free comments. The results of the evaluation are shown in Table 12. Compared to "Flavored water" sample 4 in which the total weight of mono-, di- and trisaccharides in the beverage accounted for 70% of the total weight of all saccharides in it, "Flavored water" sample 5 of the present invention in which 75% of the total weight of saccharides in the beverage was composed of mono-, di- and trisaccharides had a more comfortable mouthfeel and had a more pleasant aftertaste.

**[Table 12]**

| | Panelist A | Panelist B | Panelist C |
|---|---|---|---|
| "Flavored water" 4 | Uncomfortable mouthfeel | Lingering at the tip of the tongue. As tasting proceeded, a heavy aftertaste became prominent. | Heavy |
| | Δ | × | × |
| "Flavored water" 5 | Soft feeling on the mouth. Tender feeling at the end of tasting. | An overall mellow texture. Comfortable mouthfeel in aftertaste. | Soft. Balanced feeling to the mouth. |
| | ○ | ○ | ○ |

From these data, it is concluded that the Flavored water sample in which the total weights of mono-, di- and trisaccharides in the beverage accounted for 75% or more of the total weight of all saccharides in it provided a more comfortable mouthfeel and provided a more pleasant aftertaste than the Flavored water sample in which 70% of the total weight of all sacchardies in the beverage was composed of mono-, di- and trisaccharides.

### Example 5 (Production of Tea Beverage)

Tea beverage samples 1 and 2 were produced in accordance with the recipes shown in Table 13 to provide an osmotic pressure of 100 mOsm/KG in each sample. The blended tea was available on the market under the trade name "ASAHI 16CHA" (ASAHI SOFT DRINKS CO., LTD.) The respective beverages were each filled into a 500-mL PET bottle and then cooled. Table 13 also cites the contents and relative proportions of the respective saccharides in each beverage. The osmotic pressures and saccharide amounts of the prepared beverages were analyzed by the methods described in Example 1.

**[Table 13]**

| | Tea beverage 1 | Tea beverage 2 |
|---|---|---|
| Blended tea (g) | 1000 | 1000 |
| HIGH MALTOSE (g) | 33.2 | 16.7 |
| OLIGOTOSE (g) | 0 | 21.5 |
| Total amount (g) | 1033 | 1038 |
| Monosaccharides (g/100 g) | 0.17 | 0.13 |
| Disaccharides (g/100 g) | 2.93 | 2.18 |
| Trisaccharides (g/100 g) | 0.00 | 0.96 |
| Total saccharides (g/100 g) | 3.11 | 3.72 |
| Sum of mono-to trisaccharides/ total saccharides (%) | 100 | 88 |
| Disaccharides:trisaccharides (wt) | 100:0 | 69:41 |

Percentages in the Table refer to wt%.

A sensory evaluation was made of the respective beverages. The method and criteria for evaluation were as described in Example 3. The results of the evaluation are shown in Tables 14 and 15. Tea beverage sample 2 of the present invention, in comparison with tea beverage sample 1 that contained no trisaccharides, had a comfortable mouthfeel and a pleasant aftertaste. A further problem with tea beverage sample 1 was that as it was continually drunken, the rating on these items decreased gradually and the preference after drinking 500 mL also had a tendency to decrease from the level at the start of drinking. On the other hand, tea beverage sample 2 of the present invention, when drunk continually, remained almost the same or even improved in terms of the comfortable mouthfeel and so on and, what is more, the preference after drinking 500 mL was comparable to or even higher than at the start of drinking.

**[Table 14]**

| Beverage | Panelist | Start of drinking (score) | | End of drinking (score) | Change in preference | Free comments |
|---|---|---|---|---|---|---|
| Tea beverage 1 | A | 1 | → | 1 | 0 | When a full bottle was drunk up, no refreshed feeling was sensed. |
| | B | 3 | → | 3 | 0 | In spite of the sample being a tea beverage, sweetness lingered on the tongue, giving an unpleasant aftertaste. |
| | C | 5 | → | 4 | -1 | As drinking proceeded, a sugary aftertaste was uncomfortable. |
| | D | 3 | → | 2 | -1 | When a full bottle was drunk up, a lingering sensation was felt in the throat. |
| Tea beverage 2 | A | 5 | → | 5 | 0 | Sustained moisture brought me to feel like drinking the beverage frequently. |
| | B | 4 | → | 5 | +1 | As drinking proceeded, feel on the mouth became increasingly tender. |
| | C | 6 | → | 6 | 0 | In the second half of drinking, mouthfeel was comfortable. |
| | D | 3 | → | 3 | 0 | Sensation of permeation into the tongue was felt from the start to the end of the tasting. |

**[Table 15]**

| Panelist A | | | | | | | | | | | | | | | |
|---|---|---|---|---|---|---|---|---|---|---|---|---|---|---|---|
| | Description | 1^{st} sip | 2^{nd} sip | 3^{rd} sip | 4^{th} sip | 5^{th} sip | 6^{th} sip | 7^{th} sip | 8^{th} sip | | | | | | |
| Tea beverage 1 | Mouthfeel | 3 | 3 | 2 | 2 | 2 | 2 | 2 | 2 | | | | | | |
| | Heaviness of aftertaste | 2 | 2 | 2 | 2 | 1 | 1 | 1 | 1 | | | | | | |
| | Stickiness of aftertaste | 1 | 1 | 1 | 1 | 1 | 1 | 1 | 1 | | | | | | |
| Tea beverage 2 | Mouthfeel | 3 | 3 | 3 | 3 | 3 | | | | | | | | | |
| | Heaviness of aftertaste | 4 | 4 | 4 | 4 | 4 | | | | | | | | | |
| | Stickiness of aftertaste | 3 | 3 | 3 | 3 | 3 | | | | | | | | | |
| Panelist B | | | | | | | | | | | | | | | |
| | Description | 1^{st} sip | 2^{nd} sip | 3^{rd} sip | 4^{th} sip | 5^{th} sip | 6^{th} sip | 7^{th} sip | 8^{th} sip | 9^{th} sip | 10^{th} sip | 11^{th} sip | 12^{th} sip | 13^{th} sip | 14^{th} sip |
| Tea b everage 1 | Moulhfeel | 3 | 2.5 | 2 | 2 | 2 | 2 | 2 | 1.5 | 1.5 | 1.5 | 1.5 | 1.5 | 1.5 | 1.5 |
| | Heaviness of aftertaste | 2 | 2 | 2 | 2 | 1.5 | 1.5 | 1.5 | 1 | 1 | 1 | 2 | 1 | 1 | 1 |
| | Stickiness of aftertaste | 2 | 1.5 | 1.5 | 1.5 | 1.5 | 1.5 | 1.5 | 1 | 1 | 1 | 2 | 1 | 1 | 1 |
| Tea beverage 2 | Mouthfeel | 3 | 3 | 3 | 3 | 3 | 3 | 3 | 3 | 2 | 2 | 2 | 2 | 2 | 3 |
| | Heaviness of aftertaste | 2 | 2 | 2 | 2 | 2 | 2 | 2 | 2 | 2 | 2 | 1.5 | 1.5 | 2 | 3 |
| | Stickiness of aftertaste | 2 | 2.5 | 2 | 2 | 2 | 2 | 2 | 2 | 1.5 | 1.5 | 1.5 | 1.5 | 2 | 3 |

### Example 6 (Production of Coffee Beverage)

Coffee beverage samples 1 and 2 were produced in accordance with the recipes shown in Table 16 to provide an osmotic pressure of 120 mOsm/KG in each sample. The black coffee was available on the market under the trade name "BLACK SUGARLESS PLATINUM AROMA" (UCC UESHIMA Co., Ltd.) The respective beverages were each filled into a 500-mL PET bottle and then cooled. Table 16 also cites the contents and relative proportions of the respective saccharides in each beverage. The osmotic pressures and saccharide amounts of the prepared beverages were analyzed by the methods described in Example 1.

**[Table 16]**

| | Coffee beverage 1 | Coffee beverage 2 |
|---|---|---|
| Black coffee (g) | 1000 | 1000 |
| HIGH MALTOSE (g) | 27.0 | 3.6 |
| OLIGOTOSE (g) | 0 | 29.3 |
| Total amount (g) | 1027 | 1033 |
| Monosaccharides (g/100 g) | 0.73 | 0.66 |
| Disaccharides (g/100 g) | 2.48 | 1.40 |
| Trisaccharides (g/100 g) | 0.10 | 1.38 |
| Total sacchariders (g/100 g) | 3.31 | 4.03 |
| Sum of mono-to trisaccharides/ total saccharides (%) | 100 | 85 |
| Disaccharides:trisaccharides (wt) | 96:4 | 50:50 |

Percentages in the Table refer to wt%.

A sensory evaluation was made of the respective beverages. The method and criteria for evaluation were as described in Example 4. The results of the evaluation are shown in Table 17. Compared to coffee beverage sample 1 whose disaccharide-to-trisaccharide ratio was outside the range of the present invention, coffee beverage sample 2 of the present invention had a pleasant aftertaste.

**[Table 17]**

| | Panelist A | Panelist B | Panelist C |
|---|---|---|---|
| Coffee beverage 1 | Lingering bitter aftertaste | Lingering bitter aftertaste | Acidity of coffee felt. |
| | Δ | Δ | × |
| Coffee beverage 2 | Lingering bitterness vanishes. Soft aftertaste. | Lingering bitterness vanishes. Soft aftertaste. | Coffee, yet the aftertaste is felt vanishing. |
| | ○ | ○ | ○ |

### Example 7 (Production of Carbonated Drink)

Carbonated drink samples 1 and 2 were produced in accordance with the recipes shown in Table 18 to provide an osmotic pressure of 30 mOsm/KG in each sample. The carbonated water was available on the market under the trade name "SUNTORY SODA 200 mL BOTTLE" (SUNTORY FOODS LIMITED). This carbonated water contained carbon dioxide gas at a concentration of 3.9 kg/cm². The respective drinks were each filled into a 500-mL PET bottle and then cooled. Table 18 also cites the contents and relative proportions of the respective saccharides in each drink. The osmotic pressures and saccharide amounts of the prepared drinks were analyzed by the methods described in Example 1.

**[Table 18]**

| | Carbonated drink 1 | Carbonated drink 2 |
|---|---|---|
| Carbonated water (g) | 611 | 611 |
| Pure water (g) | 378.0 | 375.0 |
| HIGH MALTOSE (g) | 11 | 1.4 |
| OLIGOTOSE (g) | 0 | 12.6 |
| Total amount (g) | 1000 | 1000 |
| Monosaccharides (g/100 g) | 0.06 | 0.03 |
| Disaccharides (g/100 g) | 0.99 | 0.54 |
| Trisaccharides (g/100 g) | 0.00 | 0.56 |
| Total saccharides (g/100 g) | 1.05 | 1.39 |
| Sum of mono-to trisaccharides/ total saccharides (%) | 100 | 81 |
| Disaccharides:trisaccharides (wt) | 100:0 | 49:51 |

| | | |
|---|---|---|
| Percentages in the Table refer to wt%. | | |

A sensory evaluation was made of the respective drinks. The method and criteria for evaluation were as described in Example 4. The results of the evaluation are shown in Table 19. Compared to carbonated drink sample 1 whose disaccharide-to-trisaccharide ratio was outside the range of the present invention, carbonated drink sample 2 of the present invention had a comfortable mouthfeel and a pleasant aftertaste, with a tender stimulation provided by carbonic acid.

**[Table 19]**

| | Panelist A | Panelist B | Panelist C |
|---|---|---|---|
| Carbonated drink 1 | Heavy mouthfeel | Dull, Heavy | No refreshing aftertaste of carbonic acid gas. |
| | Δ | Δ | × |
| Carbonated drink 2 | Gas pressure, without unpleasant stimulation. | Tender bubbles are felt. | Bubbles are felt smooth. |
| | | No lingering aftertaste. | |
| | No "gritty" sensation. | Mouthfeel is pleasant. | |
| | ○ | ○ | ○ |

### Example 8 (Production of Fruit Juice Drink)

Fruit juice drink samples 1 and 2 were produced in accordance with the recipes shown in Table 20 to provide an osmotic pressure of 110 mOsm/KG in each sample. The orange juice was available on the market under the trade name "NACCHAN ORANGE" (SUNTORY FOODS LIMITED). The respective drinks were each filled into a 500-mL PET bottle and then cooled. Table 20 also cites the contents and relative proportions of the respective saccharides in each drink. The osmotic pressures and saccharide amounts of the prepared drinks were analyzed by the methods described in Example 1.

**[Table 20]**

| | Fruit juice drink 1 | Fruit juice drink 2 |
|---|---|---|
| Orange juice (g) | 87 | 87 |
| Granulated sugar (g) | 20.0 | 3.6 |
| OLIGOTOSE (g) | 0 | 23.1 |
| Total amount (g) | 1000 | 1000 |
| Monosaccharides (g/100 g) | 0.39 | 0.43 |
| Disaccharides (g/100 g) | 2.40 | 1.52 |
| Trisaccharides (g/100 g) | 0.00 | 1.03 |
| Total saccharides (g/100 g) | 2.80 | 3.46 |
| Sum of mono-to trisaccharides/ total saccharides (%) | 100 | 86 |
| Disaccharides:trisaccharides (wt) | 100:0 | 60:40 |

Percentages in the Table refer to wt%.

A sensory evaluation was made of the respective drinks. The method and criteria for evaluation were as described in Example 4. The results of the evaluation are shown in Table 21. Compared to fruit juice drink sample 1 whose disaccharide-to-trisaccharide ratio was outside the range of the present invention, carbonated drink sample 2 of the present invention had a comfortable mouthfeel and a pleasant aftertaste.

**[Table 21]**

| | Panelist A | Panelist B | Panelist C |
|---|---|---|---|
| Fruit juice drink 1 | Good connection between the juice and sugar. | Too much body taste | Heaviness felt. |
| | No strange feeling. | | Lingeringsensationexists. |
| | Heaviness lingers on the tongue. Texture lingers. | | |
| | Δ | Δ | Δ |
| Fruit juice drink 2 | Sweetness/acidity balance is upset. | Comfortable mouthfeel in aftertaste. | Clear aftertaste |
| | Acidity predominates. | Good vanishing aftertaste. | |
| | ○ | ○ | ○ |

## Claims

1. A beverage that comprises saccharides and which satisfies all of the following conditions (i) to (iii):
(i) the total weights of mono-, di- and trisaccharides contained in the beverage account for 75% or more of the total weight of all saccharides contained in the beverage;
(ii) the ratio of the total weight of the disaccharides to that of the trisaccharides is from 5:1 to 9:10; and
(iii) the osmotic pressure is from 30 to 130 mOsm/KG.

2. The beverage according to claim 1, wherein the total content of all saccharides per 100 g of the beverage is from 0.5 to 10 g.

3. The beverage according to claim 1 or 2, wherein the total content of the trisaccharides per 100 g of the beverage is from 0.05 to 2.70 g.

4. The beverage according to any one of claims 1 to 3, wherein the total weight of the monosaccharides accounts for 2.0 to 70% of the total weight of all saccharides.

5. A process for producing a beverage, which comprises the following steps (i) to (iii):
(i) adjusting the makeup of saccharides in the beverage such that the total weights of mono-, di- and trisaccharides contained in the beverage account for 75% or more of the total weight of all saccharides contained in the beverage;
(ii) adjusting the concentrations of the di- and trisaccharides in the beverage such that the ratio of the total weight of the disaccharides to that of the trisaccharides in the beverage is from 5:1 to 9:10; and
(iii) adjusting the osmotic pressure of the beverage to lie from 30 to 130 mOsm/KG.

## Patentansprüche

1. Ein Getränk, welches Saccharide umfasst und welches alle nachstehenden Bedingungen (i) bis (iii) erfüllt:
(i) die Gesamtgewichte an Mono-, Di- und Trisacchariden, welche in dem Getränk enthalten sind, machen 75 % oder mehr des Gesamtgewichts aller Saccharide, welche in dem Getränk enthalten sind, aus;
(ii) das Verhältnis des Gesamtgewichts der Disaccharide zu dem der Trisaccharide beträgt 5:1 bis 9:10; und
(iii) der osmotische Druck beträgt 30 bis 130 mOsm/kg.

2. Das Getränk gemäß Anspruch 1, wobei der Gesamtgehalt aller Saccharide pro 100 g des Getränks 0,5 bis 10 g beträgt.

3. Das Getränk gemäß Anspruch 1 oder 2, wobei der Gesamtgehalt an Trisacchariden pro 100 g des Getränks 0,05 bis 2,70 g beträgt.

4. Das Getränk gemäß einem der Ansprüche 1 bis 3, wobei das Gesamtgewicht an Monosacchariden 2,0 bis 70 % des Gesamtgewichts aller Saccharide ausmacht.

5. Ein Verfahren zur Herstellung eines Getränks, welches die nachstehenden Schritte (i) bis (iii) umfasst:
(i) Einstellen der Zusammensetzung der Saccharide in dem Getränk derart, dass die Gesamtgewichte an Mono-, Di- und Trisacchariden, welche in dem Getränk enthalten sind, 75 % oder mehr des Gesamtgewichts aller Saccharide, die in dem Getränk enthalten sind, ausmachen;
(ii) Einstellen der Konzentrationen der Di- und Trisaccharide in dem Getränk derart, dass das Verhältnis des Gesamtgewichts der Disaccharide zu dem der Trisaccharide in dem Getränk 5:1 bis 9:10 beträgt; und
(iii) Einstellen des osmotischen Drucks des Getränks, so dass dieser im Bereich von 30 bis 130 mOsm/kg liegt.

## Revendications

1. Boisson qui comprend des saccharides et qui satisfait toutes les conditions (i) à (iii) suivantes :
(i) les poids totaux des mono-, di- et trisaccharides contenus dans la boisson représentent 75 % ou plus du poids total de tous les saccharides contenus dans la boisson ;
(ii) le rapport du poids total des disaccharides à celui des trisaccharides est de 5/1 à 9/10 ; et
(iii) la pression osmotique est de 30 à 130 mOsm/kg.

2. Boisson selon la revendication 1, dans laquelle la teneur totale de tous les saccharides pour 100 g de la boisson est de 0,5 à 10 g.

3. Boisson selon la revendication 1 ou 2, dans laquelle la teneur totale des trisaccharides pour 100 g de la boisson est de 0,05 à 2,70 g.

4. Boisson selon l'une quelconque des revendications 1 à 3, dans laquelle le poids total des monosaccharides représente de 2,0 à 70 % du poids total de tous les saccharides.

5. Procédé de production d'une boisson, qui comprend les étapes (i) à (iii) suivantes :
(i) ajustement de la composition de saccharides dans la boisson de manière à ce que les poids totaux des mono-, di- et trisaccharides contenus dans la boisson représentent 75 % ou plus du poids total de tous les saccharides contenus dans la boisson ;
(ii) ajustement des concentrations des di- et trisaccharides dans la boisson de manière à ce que le rapport du poids total des disaccharides à celui des trisaccharides dans la boisson soit de 5/1 à 9/10 ; et
(iii) ajustement de la pression osmotique de la boisson pour qu'elle valle de 30 à 130 mOsm/kg.
